# EUROPÄISCHE PATENTSCHRIFT

(11) **EP 1 185 781 B1**
(45) Veröffentlichungstag und Bekanntmachung des Hinweises auf die Patenterteilung: **23.02.2005**
(21) Anmeldenummer: 00925237.0
(22) Anmeldetag: 26.04.2000
(51) Int. Cl.: F02M 1/16, F02D 19/08

(54) **KRAFTSTOFFVERSORGUNGSANLAGE**
FUEL SUPPLY SYSTEM
SYSTEME D'ALIMENTATION EN CARBURANT

(30) Priorität: 15.06.1999 DE 19927174
(43) Veröffentlichungstag der Anmeldung: 13.03.2002
(73) Patentinhaber: DaimlerChrysler AG, 70567 Stuttgart (DE)
(72) Erfinder: HOLDER, Eberhard, D-72127 Kusterdingen (DE); KEMMLER, Roland, D-70619 Stuttgart (DE); MATT, Martin, D-76646 Bruchsal (DE); PFEFFER, Viktor, D-73760 Ostfildern (DE); PLOG, Carsten, D-88677 Markdorf (DE); STENGEL, Thomas, D-88045 Friedrichshafen (DE)
(86) Internationale Anmeldenummer: PCT/EP2000/003700
(87) Internationale Veröffentlichungsnummer: WO 2000/077381

(56) Entgegenhaltungen:
- EP-A- 0 060 976
- WO-A-99/06683
- US-A- 2 865 355
- US-A- 4 220 120
- US-A- 4 876 989
- US-A- 5 546 908

## Beschreibung

Die Erfindung betrifft eine Kraftstoffversorgungsanlage für eine Brennkraftmaschine mit den Merkmalen des Oberbegriffes des Anspruches 1.

Die derzeit zum Betrieb von Brennkraftmaschinen, z.B. für Kraftfahrzeuge wie Lastkraftwagen, Personenkraftwagen, Busse, verfügbaren Kraftstoffe stellen einen Kompromiss dar zwischen einerseits Einschränkungen seitens der Kraftstoffhersteller, z.B. aufgrund unterschiedlicher Rohölqualitäten, Herstellungsverfahren, Kosten und Energieaufwand, und andererseits teilweise konträren Anforderungen seitens der Brennkraftmaschinen, wie z.B. sicherer Kaltstart auch bei extrem niedrigen Temperaturen, niedrige Abgas- und Verdunstungsemissionen, geringer Verbrauch, hohe Klopffestigkeit auch bei aufgeladenen Motoren, Verhinderung von Ablagerungen, Vermeidung von Korrosion, geringer Schwefelgehalt, ruhiger Motorlauf und hohe Sicherheit. Um die vorhandenen Kraftstoffe besser an die Anforderungen der Brennkraftmaschine anpassen zu können, werden Kraftstoffversorgungsanlagen der eingangs genannten Art verwendet.

Aus der US 4 220 120 ist eine Kraftstoffversorgungsanlage der eingangs genannten Art bekannt, umfassend einen Kraftstofftank für flüssigen Kraftstoff, eine Kraftstoffaufbereitungseinrichtung, die eingangsseitig den Kraftstoff vom Kraftstofftank erhält, daraus wenigstens zwei verschiedene Kraftstoffteile erzeugt und ausgangsseitig bereitstellt. Des weiteren sind Einstellmittel vorgesehen, die es ermöglichen, in Abhängigkeit bestimmter Betriebszustände der Brennkraftmaschine die jeweiligen Kraftstoffteile und den Kraftstoff separat für die Brennkraftmaschine zur Verfügung zu stellen. Dabei weisen diese Einstellmittel eine Mischeranordnung auf, die eingangsseitig den Kraftstoff und/oder die Kraftstoffteile erhält, daraus durch Mischung in Abhängigkeit beliebiger Betriebszustände der Brennkraftmaschine ein für den aktuellen Betriebszustand vorbestimmtes Kraftstoffgemisch erzeugt und dieses für die Brennkraftmaschine zur Verfügung stellt.

Die US 4,876,989 zeigt eine andere Kraftstoffversorgungsanlage, bei welcher eine Brennkraftmaschine mit Alkohol betrieben wird. Für kalte Außentemperaturen ist dabei vorgesehen, mit Hilfe eines geeigneten Reaktors aus dem Alkohol Dimethylester zu generieren, um diesen zusätzlich zum Alkohol in einen Gemischbildungsraum stromauf der Brennräume der Brennkraftmaschine einzubringen. Die Eindüsung des Alkohols und die Eindüsung des Dimethylesters erfolgt dabei über separate Leitungen, wobei der Reaktor direkt aus einem Kraftstofftank mit Alkohol versorgt wird.

Aus der DE 197 34 493 C1 ist eine weitere Kraftstoffversorgungsanlage bekannt, die einen Kraftstofftank für flüssigen Kraftstoff aufweist. Außerdem ist eine Kraftstoffaufbereitungseinrichtung, nämlich eine Verdampfungsund Kondensierungseinrichtung, vorgesehen, die eingangsseitig den Kraftstoff vom Kraftstofftank erhält, daraus einen niedrig siedenden Kraftstoffteil und einen höher siedenden Kraftstoffteil erzeugt und diese Kraftstoffteile ausgangsseitig bereitstellt. Der niedrig siedende Kraftstoffteil wird dabei in einem Zwischentank und der höher siedende Kraftstoffteil in einem Zusatztank gespeichert. Des weiteren verfügt die bekannte Kraftstoffversorgungsanlage über eine Hauptkraftstoffpumpe, die saugseitig über ein Umschaltventil entweder mit dem den Kraftstoff enthaltenden Kraftstofftank oder mit dem den niedrig siedenden Kraftstoffteil enthaltenden Zusatztank verbunden ist und druckseitig an einen ersten Eingang eines Wechselventils angeschlossen ist. Am zweiten Eingang dieses Wechselventils ist die Druckseite einer Zusatzkraftstoffpumpe angeschlossen, die saugseitig mit dem den höher siedenden Kraftstoffteil enthaltenden Zwischentank verbunden ist. Die Ausgangsseite des Wechselventils steht mit der Brennkraftmaschine in Verbindung. Durch die separaten Kraftstoffpumpen, das Wechselventil und das Umschaltventil verfügt die bekannte Kraftstoffversorgungsanlage in Verbindung mit einer entsprechenden Steuerung über Einstellmittel, die es ermöglichen, in Abhängigkeit bestimmter Betriebszustände der Brennkraftmaschine die jeweiligen Kraftstoffteile und den Kraftstoff separat für die Brennkraftmaschine zur Verfügung zu stellen. Für einen Start und eine Warmlaufphase der Brennkraftmaschine wird die Zusatzkraftstoffpumpe betätigt, so daß die Brennkraftmaschine über das Wechselventil ausschließlich mit dem niedrig siedenden Kraftstoffteil versorgt wird. Im Vollastbetrieb wird die Hauptkraftstoffpumpe betätigt, wobei das Umschaltventil so geschaltet ist, daß es ausschließlich den höher siedenden Kraftstoffteil zuführt. In allen dazwischen liegenden Betriebszuständen der Brennkraftmaschine ist das Umschaltventil so geschaltet, daß es den im Kraftstofftank enthaltenden Kraftstoff der Hauptkraftstoffpumpe zuführt, die diesen der Brennkraftmaschine zuführt.

Die vorliegende Erfindung beschäftigt sich mit dem Problem, bei einer Kraftstoffversorgungsanlage der eingangs genannten Art die Möglichkeiten, den vorhandenen Kraftstoff an die Anforderungen der Brennkraftmaschine anzupassen, zu verbessern.

Dieses Problem wird erfindungsgemäß durch eine Kraftstoffversorgungsanlage mit den Merkmalen des Anspruches 1 gelöst.

Die Erfindung beruht auf dem allgemeinen Gedanken, den im Kraftstofftank bereitgestellten, getankten Kraftstoff mittels einer Kraftstoffaufbereitungseinrichtung in Kraftstoffteile, d.h. in einzelne Komponenten oder Komponentengemische des getankten Kraftstoffes, zu zerlegen oder aufzuteilen und aus diesen Kraftstoffteilen und vorzugsweise auch aus dem getankten Kraftstoff mittels einer Mischanordnung, die grundsätzlich eine beliebige Mischung der ihr zugeführten Kraftstoffe bzw. Kraftstoffteile ermöglicht, das für den aktuell vorliegenden Betriebszustand optimale Kraftstoffgemisch durch geeignete Mischung herzustellen und der Brennkraftmaschine zur Verfügung zu stellen. Dieses Kraftstoffgemisch wird dabei durch eine gezielte Mischung der zuvor generierten Kraftstoffteile miteinander bzw. mit dem ursprünglich getankten Kraftstoff erzeugt.

Zweckmäßigerweise verfügt dazu die Mischanordnung über eine Steuerung, die das zum aktuellen Betriebszustand zugehörige Kraftstoffgemisch kennfeldmäßig bestimmt und die Mischanordnung zur Erzeugung dieses Kraftstoffgemisches entsprechend betätigt. Durch Feldversuche kann für beliebige Betriebszustände das zugehörige, optimale Kraftstoffgemisch ermittelt und für die Steuerung abrufbar gespeichert werden. Die zur Bestimmung des aktuellen Betriebszustandes der Brennkraftmaschine erforderlichen Daten kann die Steuerung dabei z.B. von einer elektrischen Motorsteuerung erhalten, so daß diesbezüglich kein erhöhter Aufwand betrieben werden muß.

Entsprechend einer bevorzugten Ausführungsform können sich die von der Kraftstoffaufbereitungseinrichtung erzeugten Kraftstoffteile durch ihre Siedetemperatur und/oder durch ihren Schwefelgehalt und/oder durch ihre Cetanzahl und/oder durch ihren Reduktionsmittelgehalt voneinander unterscheiden. Beispielsweise führt ein niedrig siedender Kraftstoffteil bei Benzin-Kraftstoffen zu erheblicher Verminderung der HC-Emissionen der Brennkraftmaschine. Im Unterschied dazu kann mit einem höher siedenden Kraftstoffteil, der eine höhere Klopffestigkeit aufweist, die Leistung der Brennkraftmaschine gesteigert werden, wobei gleichzeitig der Verbrauch zurückgeht. Mit einem niedrig siedenden und schwefelarmen Kraftstoffteil kann eine Katalysatorvergiftung vermieden werden, dies insbesondere bei einem Schichtladebetrieb von Brennkraftmaschinen mit Direkteinspritzung. Dem gegenüber arbeitet auch ein höher siedender und schwefelreicher Kraftstoffteil mit hoher Klopffestigkeit bei Hochlast im wesentlichen stöchiometrisch. Bei Diesel-Kraftstoff kann ein Kraftstoffteil mit reduzierter Cetanzahl für den Warmbetrieb der Brennkraftmaschine vorgesehen sein, während für einen Kaltstart bzw. zum Warmlauf ein Kraftstoffteil mit erhöhter Cetanzahl von Vorteil ist. Darüber hinaus kann ein Kraftstoffanteil mit erhöhtem Reduktionsmittelgehalt besonders zur Abgasnachbehandlung bei mager betriebenen Brennkraftmaschinen die Emissionswerte verbessern.

Weitere bevorzugte Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert.

Es Zeigen, jeweils schematisch,
- Fig. 1: eine schaltplanartige Prinzipskizze auf eine erfindungsgemäße Kraftstoffversorgungsanlage in einer ersten Ausführungsform und
- Fig. 2: eine Kraftstoffversorgungsanlage nach der Erfindung in einer zweiten Ausführungsform.

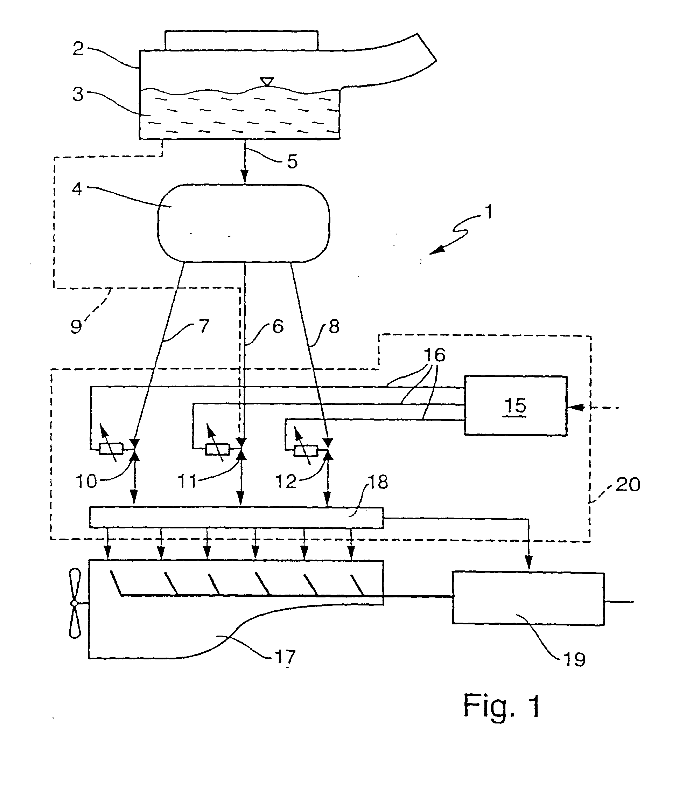

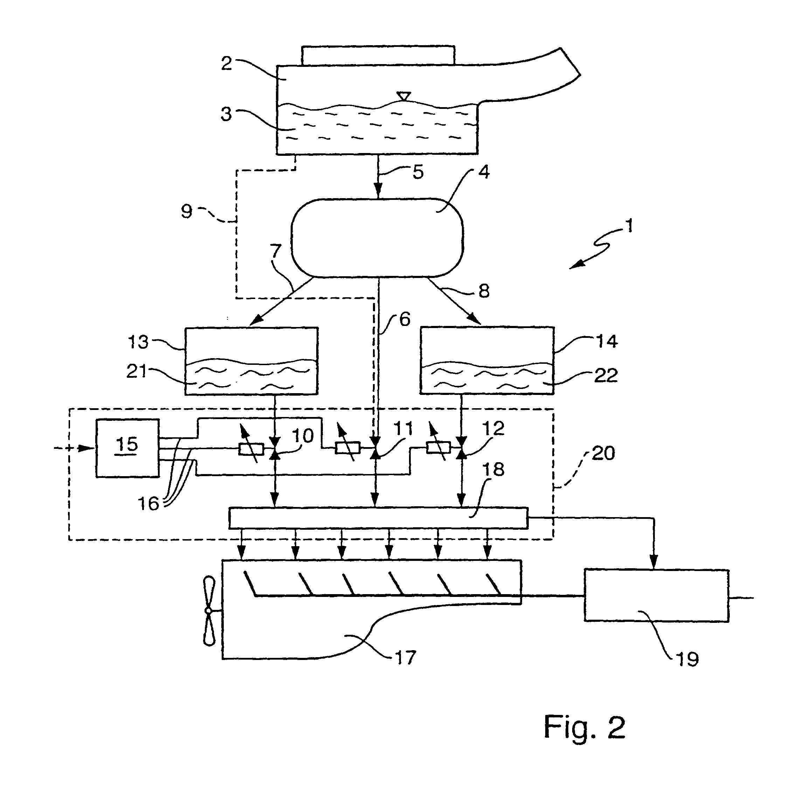

Entsprechend den Figuren 1 und 2 weist eine erfindungsgemäße Kraftstoffversorgungsanlage 1 einen Kraftstofftank 2 auf, in den ein flüssiger Kraftstoff 3 einfüllbar ist. Die Kraftstoffversorgungsanlage 1 weist außerdem eine Kraftstoffaufbereitungseinrichtung 4 auf, die eingangsseitig . den Kraftstoff vom Kraftstofftank 2 erhält (vgl. Pfeil 5) und ausgangsseitig über eine Kraftstoffleitung 6 den unveränderten Kraftstoff 3 des Kraftstofftanks 2, über eine Kraftstoffleitung 7 einen ersten Kraftstoffteil (vgl. Pos. 21 in Fig. 2), z.B. einen niedrig siedenden Kraftstoffteil, und über eine Kraftstoffleitung 8 einen zweiten Kraftstoffteil (vgl. Pos. 22 in Fig. 2), z.B. einen höher siedenden Kraftstoffteil, abgibt. Alternativ zur Kraftstoffleitung 6 kann auch eine Kraftstoffleitung 9 vorgesehen sein, die die Kraftstoffaufbereitungseinrichtung 4 umgeht und mit unterbrochener Linie dargestellt ist.

Die Kraftstoffaufbereitungseinrichtung 4 kann beispielsweise den zugeführten Kraftstoff mittels einer Gasförderpumpe durch Vakuumverdampfung mit nachfolgender Druckkondensation fraktionieren, wodurch eine niedrig siedende Kraftstofffraktion von einer höher siedenden Kraftstofffraktion abgetrennt wird (vgl. DE 197 13 841 C1). Ebenso kann die Kraftstoffaufbereitungseinrichtung 4 eine Trennsäule mit Adsorptionsmaterial aufweisen, die durch ein chromatographisches Verfahren aus dem Kraftstoff die Kraftstoffteile generiert (vgl. DE 196 52 681 C1).

Während bei der Ausführungsform gemäß Fig. 1 die Kraftstoffleitungen 6 bzw. 9 sowie 7 und 8 jeweils direkt mit einem Dosierventil 10,11 und 12 verbunden sind, ist bei der Ausführungsform gemäß Fig. 2 der Kraftstoffaufbereitungseinrichtung 4 für jeden Kraftstoffteil 21 und 22 ein separater Speicher 13 und 14 nachgeschaltet, die jeweils mit dem zugehörigen Dosierventil 10 bzw. 12 verbunden sind. Die Dosierventile 10,11 und 12 sind bezüglich der Durchflußmenge einstellbar und werden von einer Steuerung 15 über entsprechende Steuerleitungen 16 betätigt. Die Steuerung 15 ist eingangsseitig beispielsweise mit einer nicht dargestellten Motorsteuerung gekoppelt und erhält von dieser Parameterwerte, die es der Steuerung 15 ermöglichen, den aktuellen Betriebszustand einer Brennkraftmaschine 17 zu bestimmen. Entsprechend dem festgestellten aktuellen Betriebszustand der Brennkraftmaschine 17 ermittelt die Steuerung 15 das für diesen Betriebszustand optimale Kraftstoffgemisch und die zur Erzielung dieses Kraftstoffgemisches erforderlichen Einstellwerte für die Dosierventile 10,11 und 12. Über die Steuerleitungen 16 betätigt die Steuerung 15 dann die Dosierventile 10,11,12 in der entsprechenden Weise, um das erwünschte Kraftstoffgemisch durch Mischen der Kraftstoffteile 21 und 22 sowie gegebenenfalls des Kraftstoffes 3 zu erhalten.

Bei bestimmten Betriebszuständen ist es durchaus möglich, den ursprünglich getankten Kraftstoff 3 durch Rekombination der daraus erzeugten Kraftstoffteile 21 und 22 im entsprechenden Mischungsverhältnis zu erzeugen. Bei einer derartigen Ausführungsform können die Kraftstoffleitung 6 bzw. 9 sowie das zugehörigen Dosierventil 11 entfallen.

Zum Mischen münden die Kraftstoffleitungen 6 bzw. 9, 7 und 8 stromab der zugehörigen Dosierventile 10,11,12 in einen gemeinsamen Mischerraum 18, in dem sich die einzelnen Komponenten des Kraftstoffgemisches vermischen und von dem aus die Verteilung des Kraftstoffgemisches auf die einzelnen Zylinder bzw. Brennkammer der Brennkraftmaschine 17 erfolgt. Außerdem kann es auch erforderlich sein, Kraftstoffgemisch einer der Brennkraftmaschine 17 nachgeschalteten Abgasreinigungsanlage 19 zuzuführen, um deren Reinigungswerte zu verbessern oder um diese zu regenerieren.

Die einzelnen Dosierventile 10,11,12 bilden eine Dosierventilanordnung, die auch in einem einzigen, dementsprechend aufgebauten Dosierventilkörper ausgebildet sein können.

In bestimmten Betriebszuständen der Brennkraftmaschine 17 kann es erforderlich sein, daß der eine Kraftstoffteil 21 oder der andere Kraftstoffteil 22 oder der ursprüngliche Kraftstoff 3 jeweils unvermischt das optimale Kraftstoffgemisch bilden, so daß das zugehörige Dosierventil 10,11 oder 12 vollständig geöffnet ist, während die beiden anderen Dosierventile 10,11 oder 12 dementsprechend vollständig geschlossen sind. Demnach bilden die Dosierventile 10,11 und 12 Einstellmittel, die es auch ermöglichen, die Kraftstoffteile 21 und 22 und den Kraftstoff 3 separat für die Brennkraftmaschine 17 zur Verfügung zu stellen.

Die Dosierventile 10,11,12, der Mischerraum 18 und die Steuerung 15 bilden eine Mischanordnung 20, die in den Figuren durch eine mit unterbrochenen Linien dargestellte Umrandung hervorgehoben ist. Diese Mischeranordnung 20 erhält eingangsseitig die Kraftstoffteile 21 und 22 sowie den ursprünglichen Kraftstoff 3 und erzeugt daraus durch Mischung das für den jeweils herrschenden Betriebszustand optimale Kraftstoffgemisch.

Der Mischerraum 18 kann zweckmäßigerweise durch einen Kraftstoffverteiler einer Kraftstoffeinspitzeinrichtung der Brennkraftmaschine 17 ausgebildet sein, wobei dieser Kraftstoffverteiler Einspritzventile der Kraftstoffeinspritzeinrichtung mit dem bereitgestellten Kraftstoffgemisch versorgt. Die Einspritzventile versorgen dann ihrerseits in herkömmlicher Weise die einzelnen Brennräume der Brennkraftmaschine 17 mit dem Kraftstoffgemisch.

Für die Erfindung spielt es keine Rolle, ob die Kraftstoffteile gasförmig oder flüssig vorliegen.

Für den Fall, daß die erfindungsgemäße Kraftstoffversorgungsanlage 1 in einem Kraftfahrzeug, wie z.B. einem Lastkraftwagen, einem Personenkraftwagen, einem Omnibus, ausgebildet ist, kann mit Hilfe dieser Kraftstoffversorgungsanlage 1 an Bord des Fahrzeuges für jeden Betriebszustand der Brennkraftmaschine 17 das optimale Kraftstoffgemisch generiert bzw. konditioniert werden.

## Patentansprüche

1. Kraftstoffversorgungsanlage für eine Brennkraftmaschine (17), mit einem Kraftstofftank (2) für flüssigen Kraftstoff (3), mit einer Kraftstoffaufbereitungseinrichtung (4), die eingangsseitig den Kraftstoff (3) vom Kraftstofftank (2) erhält, daraus wenigstens zwei verschiedene Kraftstoffteile (21,22) erzeugt und ausgangsseitig bereitstellt, und mit Einstellmitteln, die es ermöglichen, in Abhängigkeit bestimmter Betriebszustände der Brennkraftmaschine (17) die jeweiligen Kraftstoffteile (21,22) und den Kraftstoff (3) separat für die Brennkraftmaschine (17) zur Verfügung zu stellen, wobei die Einstellmittel eine Mischeranordnung (20) aufweisen, die eingangsseitig den Kraftstoff (3) und/oder die Kraftstoffteile (21,22) erhält, daraus durch Mischung in Abhängigkeit beliebiger Betriebszustände der Brennkraftmaschine (17) ein für den aktuellen Betriebszustand vorbestimmtes Kraftstoffgemisch erzeugt und dieses für die Brennkraftmaschine (17) zur Verfügung stellt,
**dadurch gekennzeichnet,**
- **dass** die Kraftstoffaufbereitungseinrichtung (4) stromauf der Mischeranordnung (20) mit dem Kraftstoff (3) aus dem Kraftstofftank (2) versorgt wird,
- **dass** der Brennkraftmaschine (17) in bestimmten Betriebszuständen ein Kraftstoffgemisch zur Verfügung gestellt wird, das dem Kraftstoff (3) entspricht und durch Mischung der Kraftstoffteile (21,22) gebildet ist.

2. Kraftstoffversorgungsanlage nach Anspruch 1,
**dadurch gekennzeichnet,**
**dass** eine Steuerung (15) vorgesehen ist, die das zum aktuellen Betriebszustand zugehörige Kraftstoffgemisch kennfeldmäßig bestimmt und die Mischanordnung (20) zur Erzeugung dieses Kraftstoffgemisches entsprechend betätigt.

3. Kraftstoffversorgungsanlage nach Anspruch 1 oder 2,
**dadurch gekennzeichnet,**
**dass** die Mischanordnung (20) für die Zuführung des Kraftstoffs (3) und/oder der Kraftstoffteile (21,22) jeweils eine Zuführungsleitung (6,7,8;7,8,9) aufweist, die über eine zur Durchflußmengeneinstellung in den Zuflussleitungen (6,7,8;7,8,9) betätigbare Dosierventilanordnung (10,11,12) in einen gemeinsamen Mischerraum (18) münden, wobei eine Steuerung (15) diese Dosierventilanordnung (10,11,12) in Abhängigkeit des aktuellen Betriebszustandes betätigt.

4. Kraftstoffversorgungsanlage nach einem der Ansprüche 1 bis 3,
**dadurch gekennzeichnet,**
**dass** für jeden Kraftstoffteil (21,22) ein separater Speicher (13,14) vorgesehen ist.

5. Kraftstoffversorgungsanlage nach Anspruch 3 oder 4,
**dadurch gekennzeichnet,**
**dass** der Mischerraum (18) in einem Kraftstoffverteiler einer Kraftstoffeinspritzeinrichtung ausgebildet ist, der Einspritzventile der Kraftstoffeinspritzeinrichtung mit dem bereitgestellten Kraftstoffgemisch versorgt.

6. Kraftstoffversorgungsanlage nach einem der Ansprüche 1 bis 5,
**dadurch gekennzeichnet,**
**dass** sich die Kraftstoffteile (21,22) hinsichtlich Siedetemperatur und/oder Schwefelgehalt und/oder Cetanzahl und/oder Reduktionsmittelgehalt voneinander unterscheiden.

7. Kraftstoffversorgungsanlage nach einem der Ansprüche 1 bis 6,
**dadurch gekennzeichnet,**
**dass** wenigstens einer der Kraftstoffteile (21,22) gasförmig ist.

8. Kraftstoffversorgungsanlage nach einem der Ansprüche 3 bis 7,
**dadurch gekennzeichnet,**
**dass** die Dosierventilanordnung für jede Zuführungsleitung (6,7,8;7,8,9) ein separates Dosierventil (10,11,12) aufweist.

9. Kraftstoffversorgungsanlage nach einem der Ansprüche 1 bis 8,
**dadurch gekennzeichnet,**
**dass** in bestimmten Betriebszuständen das Kraftstoffgemisch einem der Kraftstoffteile (21,22) entspricht.

10. Kraftstoffversorgungsanlagen nach einem der Ansprüche 1 bis 9,
**dadurch gekennzeichnet,**
**dass** die Kraftstoffversorgungsanlage (1) in einem Fahrzeug, z.B. Lastkraftwagen, Personenkraftwagen, Bus, ausgebildet ist.

## Claims

1. Fuel supply system for an internal-combustion engine (17), comprising a fuel tank (2) for liquid fuel (3), a fuel processing apparatus (4), which receives the fuel (3) from the fuel tank (2) on the input side, produces at least two different fuel fractions (21, 22) therefrom and provides them on the output side, and comprising adjustment means, which make it possible to provide the respective fuel fractions (21, 22) and the fuel (3) separately for the internal-combustion engine (17), as a function of specific operating states of the internal-combustion engine (17), the adjustment means having a mixer arrangement (20) receiving the fuel (3) and/or the fuel fractions (21, 22) on the input side, producing therefrom a fuel mixture predetermined for the current operating state by mixing as a function of any operating states of the internal-combustion engine (17) and providing said fuel mixture for the internal-combustion engine (17), **characterised in that**
- the fuel processing apparatus (4) is supplied with the fuel (3) from the fuel tank (2) upstream from the mixer arrangement (20),
- **in that** the internal-combustion engine (17) in specific operating states is provided with a fuel mixture which corresponds to the fuel (3) and is formed by mixing the fuel fractions (21, 22).

2. Fuel supply system according to claim 1, **characterised in that** a control unit (15) is provided which determines, according to a characteristic map, the fuel mixture pertaining to the current operating state and actuates the mixing arrangement (20) to produce this fuel mixture accordingly.

3. Fuel supply system according to claim 1 or 2, **characterised in that** the mixing arrangement (20) for the supply of the fuel (3) and/or the fuel fractions (21, 22) has a respective supply line (6, 7, 8; 7, 8, 9), said supply lines opening into a common mixer space (18) via a flow control valve arrangement (10, 11, 12) which can be actuated to adjust the through-flow quantities in the supply lines (6, 7, 8; 7, 8, 9), a control unit (15) actuating this flow control valve arrangement (10, 11, 12) as a function of the current operating state.

4. Fuel supply system according to any one of claims 1 to 3, **characterised in that** a separate store (13, 14) is provided for each fuel fraction (21, 22).

5. Fuel supply system according to claim 3 or 4, **characterised in that** the mixer space (18) is formed in a fuel distributor of a fuel injection apparatus, which supplies injection valves of the fuel injection apparatus with the fuel mixture provided.

6. Fuel supply system according to any one of claims 1 to 5, **characterised in that** the fuel fractions (21, 22) differ from one another with respect to boiling temperature and/or sulphur content and/or cetane number and/or reduction medium content.

7. Fuel supply system according to any one of claims 1 to 6, **characterised in that** at least one of the fuel fractions (21, 22) is gaseous.

8. Fuel supply system according to any one of claims 3 to 7, **characterised in that** the flow control valve arrangement for each supply line (6, 7, 8; 7, 8, 9) has a separate flow control valve (10, 11, 12).

9. Fuel supply system according to any one of claims 1 to 8, **characterised in that**, in specific operating states, the fuel mixture corresponds to one of the fuel fractions (21, 22).

10. Fuel supply systems according to any one of claims 1 to 9, **characterised in that** the fuel supply system (1) is formed in a vehicle, for example lorry, passenger car, bus.

## Revendications

1. Système d'alimentation en carburant pour un moteur à combustion interne (17), comprenant un réservoir de carburant (2) pour du carburant liquide (3), un dispositif de traitement de carburant (4), qui reçoit côté entrée le carburant (3) venant du réservoir de carburant (2), génère à partir de là au moins deux parties de carburant (21, 22) différentes et les fournit à la sortie, et des moyens de réglage qui permettent de mettre à disposition les parties de carburant (21, 22) respectives et le carburant (3) séparément pour le moteur à combustion interne (17) en fonction de certains états de service du moteur à combustion interne (17), les moyens de réglage présentant un dispositif mélangeur (20), qui reçoit côté entrée le carburant (3) et/ou les parties de carburant (21, 22), génère à partir de là, par mélange en fonction de certains états de service du moteur à combustion interne (17), un mélange de carburant prédéfini pour l'état de service actuel et met à disposition ce mélange pour le moteur à combustion interne (17), **caractérisé en ce que**,
- le dispositif de traitement de carburant (4) est alimenté en amont du dispositif mélangeur (20) avec le carburant (3) provenant du réservoir de carburant (2),
- **en ce qu'**un mélange de carburant, qui correspond au carburant (3) et est formé par mélange des parties de carburant (21, 22), est mis à la disposition du moteur à combustion interne (17) dans certains états de service.

2. Système d'alimentation en carburant selon la revendication 1, **caractérisé en ce qu'**il est prévu une commande (15) qui détermine le mélange de carburant spécifique pour l'état de service actuel en fonction du diagramme caractéristique et actionne le dispositif mélangeur (20) de façon appropriée pour générer ce mélange de carburant.

3. Système d'alimentation en carburant selon la revendication 1 ou 2, **caractérisé en ce que** le dispositif mélangeur (20) présente pour l'arrivée du carburant (3) et/ou des parties de carburant (21, 22) une conduite d'arrivée (6, 7, 8 ; 7, 8, 9), qui débouche dans un espace mélangeur (18) commun au moyen d'un dispositif de vanne de dosage (10, 11, 12) pouvant être actionné pour le réglage du débit dans les conduites d'arrivée (6, 7, 8 ; 7, 8, 9), une commande (15) actionnant ce dispositif de vanne de dosage (10, 11, 12) en fonction de l'état de service actuel.

4. Système d'alimentation en carburant selon l'une quelconque des revendications 1 à 3, **caractérisé en ce qu'**il est prévu un accumulateur (13, 14) séparé pour chaque partie de carburant (21, 22).

5. Système d'alimentation en carburant selon la revendication 3 ou 4, **caractérisé en ce que** l'espace mélangeur (18) est réalisé dans un répartiteur de carburant d'un système d'injection de carburant, qui alimente des vannes d'injection du système d'injection de carburant avec le mélange de carburant mis à disposition.

6. Système d'alimentation en carburant selon l'une quelconque des revendications 1 à 5, **caractérisé en ce que** les parties de carburant (21, 22) se différencient en ce qui concerne la température d'ébullition et/ou la teneur en soufre et/ou l'indice de cétane et/ou la teneur en agent de réduction.

7. Système d'alimentation en carburant selon l'une quelconque des revendications 1 à 6, **caractérisé en ce que** au moins une des parties de carburant (21, 22) est gazeuse.

8. Système d'alimentation en carburant selon l'une quelconque des revendications 3 à 7, **caractérisé en ce que** le dispositif de vanne de dosage présente une vanne de dosage (10, 11, 12) séparée pour chaque conduite d'arrivée (6, 7, 8 ; 7, 8, 9).

9. Système d'alimentation en carburant selon l'une quelconque des revendications 1 à 8, **caractérisé en ce que** le mélange de carburant correspond à l'une des parties de carburant (21, 22) dans certains états de service.

10. Système d'alimentation en carburant selon l'une quelconque des revendications 1 à 9, **caractérisé en ce que** le système d'alimentation en carburant (1) est réalisé dans un véhicule, par exemple un camion, une voiture particulière, un autocar.
